# EUROPEAN PATENT APPLICATION

(11) **EP 4 369 242 A1**
(43) Date of publication of application: **15.05.2024**
(21) Application number: 22873956.1
(22) Date of filing: 22.09.2022
(51) Int. Cl.: G06F 30/20, G05B 19/418, B25J 9/16

(54) **METHOD AND DEVICE FOR MODIFYING PARAMETER OF KINEMATIC PAIR, AND PRODUCTION LINE SYSTEM**

(71) Applicant: Contemporary Amperex Technology Co., Limited, Ningde City, Fujian 352100 (CN)
(72) Inventor: SHI, Deqiang, Ningde, Fujian 352100 (CN); LIN, Maosen, Ningde, Fujian 352100 (CN); YANG, Lang, Ningde, Fujian 352100 (CN); WANG, Xuming, Ningde, Fujian 352100 (CN); WU, Runqi, Ningde, Fujian 352100 (CN)
(74) Representative: Rowlands, Stuart Michael
(86) International application number: PCT/CN2022/120601
(87) International publication number: WO 2024/060141

(57) **Abstract**

The embodiment of the present application provides a method for modifying parameters of kinematic pairs. The method includes: acquiring a first parameter modification command used for performing instruction to modify a value of a first pose of first kinematic pairs; determining a plurality of first devices in a plurality of devices according to the first parameter modification command, where, the plurality of devices are configured to have kinematic pair driver software, and the plurality of first devices are a plurality of devices including the first kinematic pairs; acquiring a second parameter modification command including a target value of the first pose of the first kinematic pairs; and invoking the kinematic pair driver software of the plurality of first devices according to the second parameter modification command so as to update the value of the first pose of the plurality of first kinematic pairs into the target value of the first pose. Through the above method, the efficiency of modifying the parameters of the kinematic pairs can be improved. The present application further provides an apparatus for modifying parameters of kinematic pairs, a computer-readable storage medium and a production line system to realize the above method.

## Description

### Technical Field

The present application relates to the technical field of virtual simulation, and in particular to a method and apparatus for modifying parameters of kinematic pairs and a production line system.

### Background Art

Virtual commissioning refers to the application of a virtual reality technology in the industrial field. Through the virtual technology, a digital replica of the physical manufacturing environment is created to test and verify the rationality of product design. For example, the entire production process is simulated on a computer, including units such as robots, automation device, Programmable Logic Controllers (PLCs), frequency converters, and motors. Using virtual commissioning to program and test products ahead of time gives an early view of the risks involved in converting design into the products.

In the virtual commissioning process, it is necessary to set parameters of kinematic pairs involved. Usually, it is necessary to set a node value of each kinematic pair in sequence. When a large number of kinematic pairs are involved during commissioning, the process is complex and error-prone, which affects the efficiency of virtual commissioning.

### Summary of the Invention

Embodiments of the present application provide a method and apparatus for modifying parameters of kinematic pairs and a production line system, which can improve the efficiency of modifying the parameters of the kinematic pairs.

In a first aspect, a method for modifying parameters of kinematic pairs is provided. Each kinematic pair includes at least two motion components, where the at least two kinematic components perform relative motion so that the kinematic pair can have at least one pose. The method includes: acquiring a first parameter modification command used for performing instruction to modify a value of a first pose of first kinematic pairs; determining a plurality of first devices in a plurality of devices according to the first parameter modification command, wherein, the plurality of devices are configured to have kinematic pair driver software, and the plurality of first devices are a plurality of devices including the first kinematic pairs; acquiring a second parameter modification command including a target value of the first pose of the first kinematic pairs; and invoking the kinematic pair driver software of the plurality of first devices according to the second parameter modification command so as to update the value of the first pose of the plurality of first kinematic pairs into the target value of the first pose.

Through the above implementation manners, the pose parameters of the kinematic pairs on the plurality of different devices can be uniformly modified, thereby improving the efficiency of the modification of the parameters of the kinematic pairs and the subsequent joint debugging of the devices. An executive body in the technical solution can provide a uniform interface for an upper layer (e.g., a user) for controlling the plurality of first devices. The executive body can shield specific control, by a bottom layer, over the first kinematic pairs on the different devices or the plurality of first kinematic pairs on the same device from the upper layer, and the upper layer does not need to sequentially set the pose parameters of the plurality of first kinematic pairs on the different devices, but execute batched parameter setting on the plurality of first kinematic pairs through a control command according to characters of the kinematic pairs or the devices. Thus, the efficiency of the setting process of the pose parameters of the kinematic pairs is improved, and the user experience is optimized.

In some possible implementation manners of the first aspect, each first device includes at least one kinematic pair. A first parameter modification command includes identification information and/or path information of first kinematic pairs; and the step of determining a plurality of first devices in a plurality of devices according to the first parameter modification command includes: determining the plurality of devices including the first kinematic pairs as the plurality of first devices according to the identification information and/or path information of the first kinematic pairs.

Through the above implementation manners, the first devices can be determined in a targeted manner according to actual commissioning requirements of the first kinematic pairs, and the efficiency of invoking the kinematic pair driver software to modify the pose parameters can be improved.

In some possible implementation manners of the first aspect, the step of invoking kinematic pair driver software of a plurality of first devices according to a second parameter modification command, so as to update a value of a first pose of a plurality of first kinematic pairs into a target value of the first pose includes: determining the target value of the first pose as a numerical type; and modifying the value of the first pose of the plurality of first kinematic pairs into the target value of the first pose.

Through the above implementation manners, the value of the first pose can be modified only after it is determined that an input value is in a correct format, so as to avoid missing or wrong kinematic pair pose values caused by incorrect input in the setting process.

In some possible implementation manners of the first aspect, after acquiring a first parameter modification command, the method includes: determining that a plurality of devices do not include first devices, and/or the first devices do not include first kinematic pairs; and outputting first information used for performing instruction to reacquire the first parameter modification command.

Through the above implementation manners, it is possible to first confirm whether kinematic pair selection is correct or not after acquiring the first parameter modification command, so as to ensure the correct invocation of a kinematic pair drive program in the subsequent process.

In some possible implementation manners of the first aspect, before invoking kinematic pair driver software of a plurality of first devices according to a second parameter modification command, the method includes: determining that first kinematic pairs do not have a first pose; and outputting second information used for performing instruction to reacquire the second parameter modification command.

Through the above implementation manners, the user can be prompted when the first kinematic pairs do not have the first pose, so that the user can modify the second parameter modification command in time to ensure the accuracy and timeliness of the modification of pose parameters of the kinematic pairs.

In some possible implementation manners of the first aspect, before invoking kinematic pair driver software of a plurality of first devices according to a second parameter modification command, the method includes: determining that a target value of a first pose included in the second parameter modification command is not of a numerical type, or the second parameter modification command dose not include the target value of the first pose; and outputting third information used for performing instruction to reacquire the second parameter modification command.

Through the above implementation manners, when the target value used for modifying the pose parameters of the kinematic pairs is not a target value in a correct form, the third information can be output to perform instruction to reacquire the second parameter modification command, so that the user can correct the target value in time, thereby ensuring the accuracy of the target value used for modifying the pose parameters of the kinematic pairs and the work efficiency of virtual commissioning.

In some possible implementation manners of the first aspect, identification information of a first kinematic pair includes a name, a group type and/or a category of the first kinematic pair; and path information of the first kinematic pair includes a name and/or a category of a device with the first kinematic pair.

Through the above implementation manners, the first kinematic pairs can be determined based on characteristics of the devices or kinematic pairs actually involved in the virtual commissioning process, which is helpful for the user to determine parameter modification commands based on actual commissioning requirements, and is conducive to improving work efficiency.

In some possible implementation manners of the first aspect, a first device includes one or more of a gripper, a welding gun, an automatic door and window, a robot or a compound device.

In some possible implementation manners of the first aspect, a first kinematic pair includes an air cylinder and/or a servo shaft.

In some possible implementation manners of the first aspect, a plurality of devices are devices on a production line. The production line may be any production line to be subjected to virtual commissioning, such as a battery production line and an automobile production line.

In a second aspect, an apparatus for modifying parameters of kinematic pairs is provided. Each kinematic pair includes at least two motion components, where the at least two kinematic components perform relative motion so that the kinematic pair can have at least one pose. The apparatus includes:
a first acquisition module configured to acquire a first parameter modification command used for performing instruction to modify a value of a first pose of first kinematic pairs;
an interface module configured to determine a plurality of first devices in a plurality of devices according to the first parameter modification command, wherein, the plurality of devices are configured to have kinematic pair driver software; and the plurality of first devices are a plurality of devices including the first kinematic pairs
a second acquisition module configured to acquire a second parameter modification command including a target value of the first pose of the first kinematic pairs; and
a modification module configured to invoke the kinematic pair driver software of the plurality of first devices according to the second parameter modification command so as to update the value of the first pose of the plurality of first kinematic pairs into the target value of the first pose.

In some possible implementation manners of the second aspect, each first device includes at least one kinematic pair. A first parameter modification command includes identification information and/or path information of first kinematic pairs; and an interface module is configured to: determine a plurality of devices including the first kinematic pairs as a plurality of first devices according to the identification information and/or the path information of the first kinematic pairs.

In some possible implementation manners of the second aspect, a modification module is configured to: determine a target value of a first pose as a numerical type, and modify a value of the first pose of a plurality of first kinematic pairs into the target value of the first pose.

In some possible implementation manners of the second aspect, an interface module is configured to: determine that a plurality of devices do not include first devices. The apparatus further includes an output module configured to output first information, and the first information is used for performing instruction to reacquire a first parameter modification command.

In some possible implementation manners of the second aspect, a modification module is configured to: determine that first kinematic pairs do not have a first pose; and an output module is configured to output second information, and the second information is used for performing instruction to reacquire a second parameter modification command.

In some possible implementation manners of the second aspect, a modification module is configured to determine that a target value of a first pose included in a second parameter modification command is not of a numerical type, or the second parameter modification command dose not include the target value of the first pose. An output module is configured to output third information, and the third information is used for performing instruction to reacquire the second parameter modification command.

In some possible implementation manners of the second aspect, identification information of a first kinematic pair includes a name, a group type and/or a category of the first kinematic pair; and path information of the first kinematic pair includes a name and/or a category of a device with the first kinematic pair.

In some possible implementation manners of the second aspect, a first device includes one or more of a gripper, a welding gun, an automatic door and window, a robot or a compound device.

In some possible implementation manners of the second aspect, a first kinematic pair includes an air cylinder and/or a servo shaft.

In some possible implementation manners of the second aspect, a plurality of devices are devices on a production line.

The beneficial effects of the second aspect and any possible implementation manner of the second aspect correspond to those of the first aspect and any possible implementation manner of the first aspect, which are not repeated herein.

In a third aspect, an apparatus for modifying parameters of kinematic pairs is provided, and includes: a memory configured to store programs; and a processor configured to invoke and operate the programs from the memory to execute the method for modifying the parameters of the kinematic pairs in the first aspect or any possible implementation manner of the first aspect.

Optionally, in specific implementation, the number of processors is not limited. The processor may be a universal processor, and can be realized by hardware or software. When implemented by the hardware, the processor may be a logic circuit, an integrated circuit, or the like. When implemented by the software, the processor may be the universal processor, and can be realized by reading software code stored in the memory, and the memory can be integrated in the processor, or can be independent of the processor.

In a fourth aspect, a computer-readable storage medium is provided and stores computer programs. The computer programs are executed by a processor to implement the steps of the method for modifying the parameters of the kinematic pairs in the first aspect or any possible implementation manner of the first aspect. The computer-readable storage medium includes but not limited to one or more of the listed following: a read-only memory, a random access memory, a Compact Disc Read-Only Memory (CD-ROM), a Hard Disk Drive (HDD), a Digital Video Disc (DVD), magnetic tape, an optical data storage, etc.

In a fifth aspect, a computer program product is provided. When the computer program product runs on an electronic device, the electronic device is made to execute the method for modifying the parameters of the kinematic pairs according to the first aspect or any implementation manner of the first aspect.

In a sixth aspect, a production line system is provided and includes a plurality of devices, and the apparatus for modifying the parameters of the kinematic pairs according to any possible implementation manner of the second aspect or any possible implementation manner of the third aspect. The apparatus for modifying the parameters of the kinematic pairs is used for modifying parameters of kinematic pairs of the plurality of devices.

### Description of Drawings

In order to illustrate technical solutions of embodiments of the present application more clearly, drawings required in the embodiments of the present application are simply introduced below. It will be apparent that the drawings described below are only some embodiments of the present application. For those of ordinary skill in the art, other drawings can also be obtained according to the drawings without any creative work.
Fig. 1 is a schematic architectural diagram of a virtual commissioning system disclosed by an embodiment of the present application;
Fig. 2 is a schematic flow chart of a method for modifying parameters of kinematic pairs disclosed by an embodiment of the present application;
Fig. 3 is a schematic flow chart of a method for modifying parameters of kinematic pairs disclosed by another embodiment of the present application;
Fig. 4 is a schematic structure block diagram of an apparatus for modifying parameters of kinematic pairs disclosed by an embodiment of the present application; and
Fig. 5 is a schematic structure block diagram of an apparatus for modifying parameters of kinematic pairs disclosed by another embodiment of the present application.

In the drawings, the drawings are not drawn to actual scale.

### Detailed Description

Implementation manners of the present application are described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of' means two or more; orientation or positional relationships indicated by terms such as "upper", "lower", "left", "right", "inner" and "outer" are only for facilitating the description of the present application and simplifying the description, rather than indicating or implying that an apparatus or element referred to must have a particular orientation or be constructed and operated in a particular orientation, and therefore will not be interpreted as limiting the present application. In addition, terms such as "first", "second" and "third" are only used for describing purposes, but cannot be understood as indicating or implying relative importance. "Vertical" is not strictly vertical, but within the allowable range of error. "Parallel" is not strictly parallel, but within the allowable range of error.

Orientation words appearing in the following description are directions shown in the drawings, but do not limit a specific structure of the present application. In the description of the present application, it should be noted that terms "mounting", "connecting" and "connection" should be understood in a broad sense, unless otherwise explicitly specified or defined. For example, it may be a fixed connection, a detachable connection, or an integrated connection; and it may be a direct connection or an indirect connection through an intermediate medium. For those of ordinary skill in the art, the specific meanings of the above terms in the present application may be understood according to specific circumstances.

A method for modifying parameters of kinematic pairs provided by the present application can be applied to a terminal device or a server, or software running on the terminal device or the server, such as Process Simulate, Process Design and Teamcenter under Tecnomatix software.

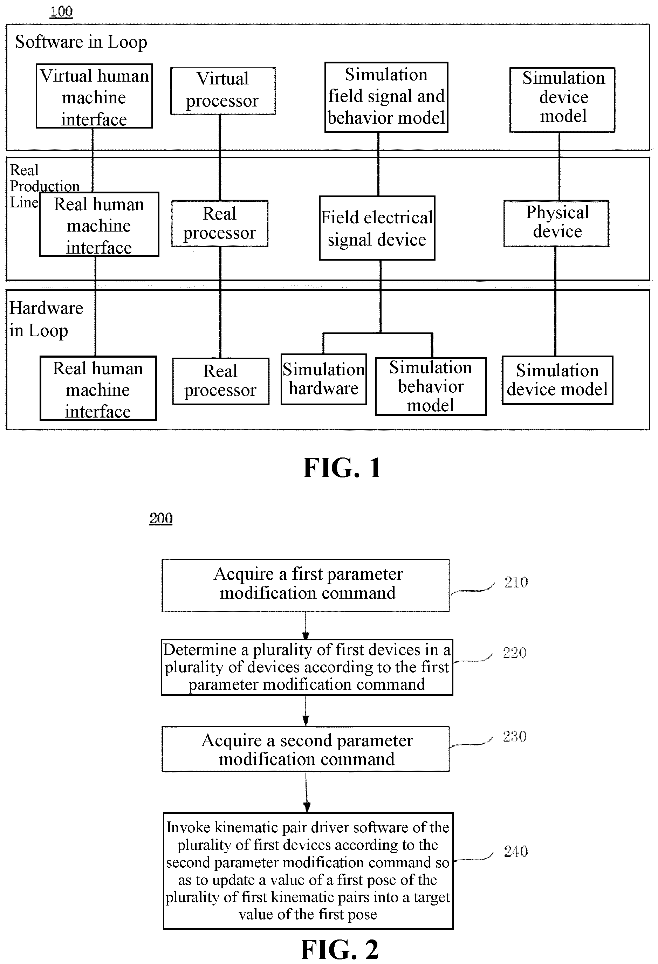

In order to better understand the solution of the embodiment of the present application, possible application scenarios of the embodiment of the present application are briefly introduced with reference to Fig. 1.

In a production line of the manufacturing industry, device development is usually carried out step by step, and mechanical design, electrical design and automation are carried out in sequence. If there are errors not detected in the above steps, devices are possibly damaged in a commissioning stage, which will bring adverse effects on the whole production line, and increase commissioning cost. Virtual commissioning establishes, by a digital technology, a model the same with a real device, and debugs a complex production line system in a virtual system, so that possible faults can be found in the early stage, the speed of on-site commissioning can be improved, and the risk and cost of on-site commissioning can be reduced.

An embodiment of the present application provides a system architecture 100 for virtual commissioning, and Fig. 1 is a schematic block diagram of the system architecture 100. As shown in Fig. 1, a real production line usually includes a Human Machine Interface (HMI), a Central Processing Unit (CPU), an electrical Input/Output (I/O) signal device and a physical device; and however, a virtual commissioning system can select two types including Software in Loop (SiL) and Hardware in Loop (HiL) according to different simulation environments. Wherein, Software in Loop refers to complete virtualization of the overall device. In the system architecture shown in Fig. 1, the real human machine interface, the central processing unit, the I/O signal device and the physical device correspond to a virtual human machine interface, a virtual processor, a simulation field signal and behavior model and a simulation device model in the Software in Loop simulation environment. Hardware in Loop refers to placing main hardware of the device in the simulation environment. In the system architecture shown in Fig. 1, the Hardware in Loop uses the real human machine interface and the central processing unit, and the I/O signal device corresponds to simulation hardware and a simulation behavior model in a virtual environment, and the physical device corresponds to the simulation device model in the virtual environment.

The physical device on the production line usually includes mechanical structural components, drive components and control programs. A user sends instructions through the human machine interface, which are converted into signals by the central processing unit for controlling the device, and then transmitted to the device through the I/O signal device. The control programs of the device control the drive components to work based on the signals, so that the mechanical structural components can complete specific actions. The kinematic links, which are composed of two or more mechanical structural components in direct contact and capable of producing relative motion, are called a kinematic pair. The kinematic pairs can be divided into different types according to the form of contact, the form of relative motion, the number of constraints introduced, and geometrical shapes of contact parts; for example, according to the form of relative motion, the kinematic pairs can be divided into a sliding pair, a turning pair, a screw pair, etc. Elements such as points, lines, and surfaces that participate in contact on the components of the kinematic pair to form the kinematic pair are called as kinematic pair elements. In the process of virtual commissioning, the kinematic pairs are required to have a plurality of poses according to commissioning requirements. In the virtual environment, the poses of the kinematic pairs can be represented by numerical values, namely, pose parameters. Reasonably setting the poses and the pose parameters of the kinematic pairs is beneficial to the simulation of a real motion state of the kinematic pairs. The kinematic pairs may be located in different devices and controlled by different driver software. In the existing virtual commissioning process, engineers usually need to manually set the pose parameters of a large number of kinematic pairs in sequence, which not only affects the efficiency of parameter setting, but also may lead to problems such as missing or wrong pose parameters of the kinematic pairs, and as a result, an adverse effect is caused on the whole virtual commissioning process.

In some embodiments of the present application, virtual commissioning can be performed through platforms such as process and plant design simulation software Tecnomatix, 3D plant design software CADWorx, and daily-oriented 3D plant design software AutoCAD Plant3D, which is not limited in the present application. Among them, Tecnomatix is a combination of comprehensive digital manufacturing solutions that can digitally transform manufacturing and a process of transforming innovative ideas and raw materials into actual products. The simulation software that can run on a workstation corresponds to a virtual device of a field device, including a motion mechanism and a logic block, and can perform related actions corresponding to a control signal of the PLC, and feed back an execution result to the PLC. Tecnomatix can be used for modifying the pose parameters of the kinematic pairs, namely, Pose value. Usually, using the platform for modifying a Pose value of a kinematic pair including three poses of HOME, OPEN and CLOSE usually includes the following steps: first select a kinematic pair object with a Pose value to be modified; turn on a Pose Editor; modify values of Poses named as HOME, OPEN and CLOSE in turn; and turn off the Pose Editor. When parameters of the plurality of kinematic pairs are required to be modified, all the kinematic pairs need to be sequentially opened, and the above steps are repeated.

In the above technical solution, HOME usually represents a zero-point pose at the beginning and end of the motion, the OPEN value represents an open pose, and CLOSE represents a closed pose. The above is just an example, and in the actual commissioning process, HOME, OPEN and CLOSE can also represent different poses in different kinematic pairs. During virtual commissioning of the device, different types of kinematic pairs need to be created, such as a welding gun, an air cylinder, and a servo shaft. There are many types and quantities of kinematic pairs. Pose values of hundreds of kinematic pairs are possibly required to be modified for a single device. This conventional modification method brings a lot of repetitive work, which is inefficient and prone to various errors such as missing filling and overfilling values, and as a result, the efficiency of device simulation and virtual commissioning is influenced.

In view of this, the present application provides a method for modifying parameters of kinematic pairs, which can improve the efficiency of modifying the parameters of the kinematic pairs. The method includes following steps:
S210: Acquire a first parameter modification command used for performing instruction to modify a value of a first pose of first kinematic pairs.

Wherein, the plurality of first kinematic pairs in step S210 may be a plurality of identical kinematic pairs, which have the same pose and pose parameters to be set; the plurality of first kinematic pairs may also be in the same category, although the actual motion components are different at the time, the pose parameters to be set are still the same; and the plurality of first kinematic pairs may also be kinematic pairs with one or more identical pose parameters but with different actual categories. In the commissioning process, the user can flexibly determine the first parameter modification command according to the above-mentioned different situations.

S220: Determine a plurality of first devices in a plurality of devices according to the first parameter modification command, wherein, the plurality of devices are configured to have kinematic pair driver software; and the plurality of first devices are a plurality of virtual devices including the first kinematic pairs.

The plurality of devices may be the virtual devices. The plurality of first devices is a plurality of devices where the first kinematic pairs are located; and the plurality of devices are configured to have the kinematic pair driver software. The first devices in step S220 may be devices each including one or more different types of kinematic pairs. For example, in some embodiments of the present application, a kinematic pair included in a first device may be an air cylinder, where, a piston and a cylinder block of the air cylinder form a linear kinematic pair; and in some other embodiments of the present application, a kinematic pair included in a first device may be a gripper with a motion mode being a compound motion of linear motion and swing, and at the time, the first kinematic pair may be determined as a sliding pair or a swinging pair according to actual demands. The kinematic pair driver software of the virtual devices may be program modules in software for establishing a virtual commissioning environment.

S230: Acquire a second parameter modification command including a target value of the first pose of the first kinematic pairs.

In the process of virtual commissioning, the poses of the kinematic pairs can be represented by numerical values. For example, when the first kinematic pairs are welding tongs possibly having an original pose, an open pose and a closed pose, the open pose may also include a plurality of poses with different open angles, and at the time, the value of the first pose may be the value of the angle. When each kinematic pair is an air cylinder, a piston linearly reciprocates within its stroke range, each kinematic pair may include the original pose, a compression pose and an expansion pose. At the time, the value of the first pose may be a coordinate value representing a location of the piston on its stroke. In addition, the first pose of the first kinematic pairs may have an initial value, and when each first kinematic pair or the first pose is a newly created kinematic pair or pose, the initial value may also be empty. In step S230, the target value included in the second parameter modification command is used for updating the initial value of the first pose or assigning a value to the first pose without an initial value.

S240: Invoke the kinematic pair driver software of the plurality of first devices according to the second parameter modification command so as to update the value of the first pose of the plurality of first kinematic pairs into the target value of the first pose.

Through the above implementation manners, the pose parameters of the kinematic pairs on the plurality of different devices can be uniformly modified, thereby improving the efficiency of the modification of the parameters of the kinematic pairs and the subsequent joint debugging of the devices. An executive body in the technical solution can provide a uniform interface for an upper layer (e.g., the user) for controlling the plurality of first devices. The executive body can shield specific control, by a bottom layer, over the first kinematic pairs on the different devices or the plurality of first kinematic pairs on the same device from the upper layer, and the upper layer does not need to sequentially set the pose parameters of the plurality of first kinematic pairs on the different devices, but execute batched parameter setting on the plurality of first kinematic pairs through a control command according to characters of the kinematic pairs or the devices. Thus, the efficiency of the setting process of the pose parameters of the kinematic pairs is improved, and the user experience is optimized.

In some embodiments of the present application, each first device includes at least one kinematic pair. A first parameter modification command includes identification information and/or path information of first kinematic pairs; and in this case, a plurality of virtual devices including the first kinematic pairs can be determined as the plurality of first devices according to the identification information and/or the path information of the first kinematic pairs so as to facilitate invoking kinematic pair driver software of the first devices to modify parameters of the kinematic pairs. Wherein, the identification information of the first kinematic pairs is used for directly determining the first device to be debugged according to the information of the first kinematic pairs, and the path information of the first kinematic pairs is used for instructing the device where the first kinematic pairs are located so that the first kinematic pair with the parameters to be modified can be determined by determining the first device to be debugged. There is usually a certain corresponding relation between the kinematic pairs and the devices. For example, when the first devices are robots, the robots may include a plurality of motion components, and at the time, the first devices have the plurality of kinematic pairs. In other embodiments, some devices can be regarded as kinematic pairs. For example, when a first device is an air cylinder, a cylinder block and a piston of the air cylinder may constitute a first kinematic pair. Therefore, the first parameter modification command can be adjusted according to characteristics of the device or kinematic pairs actually required to be debugged on the production line, so that the kinematic pairs with the parameters to be modified can be accurately and efficiently selected.

In some embodiments of the present application, optionally, when it is determined that a plurality of virtual devices do not include first devices and/or kinematic pairs included by the first devices do not include first kinematic pairs, first information is output, wherein, the first information is used for performing instruction to reacquire identification information and/or path information of the first kinematic pairs. Accordingly, the user can know errors possibly existing in a first parameter modification command in time and then adjusts the first parameter modification command, thereby ensuring accurate kinematic pair selecting and smooth later operation proceeding. The first information may be displayed to the user through a pop-up window, a prompt message and other manners.

In some embodiments of the present application, pose parameters of first kinematic pairs include a pose target value, and when it is determined that the pose target value is a numerical type, a first parameter of the plurality of first kinematic pairs are modified into the target value. In some other embodiments of the present application, second information can be output when it is determined that a target value of a first pose does not belong to a numerical type. Wherein, the second information is used for performing instruction to reacquire parameters of the first pose. In order to ensure the correct modification of the pose parameters of the kinematic pairs, the first parameter of the first kinematic pairs is only modified when the target value is of the numerical type. If the target value is of a text type, of a symbol type, etc., the second information is output to instruct the user to confirm and retype the pose parameters of the first kinematic pairs. The second information may be displayed to the user through a pop-up window, a prompt message and other manners. Through the above technical solution, it can be ensured that the input parameters can be used for modifying the pose value of the kinematic pairs.

In some embodiments of the present application, optionally, identification information of a first kinematic pair includes a name, a group type and/or a category of the first kinematic pair; and path information of the first kinematic pair includes a name and/or a category of a virtual device with the first kinematic pair.

In some embodiments of the present application, a first device may include one or more of a gripper, a welding gun, an automatic door and window, a robot or a compound device. A first kinematic pair may include one or more of an air cylinder and a shaft. In an actual production line, the first device may also be of other types.

In some embodiments of the present application, pose parameters of kinematic pairs of devices on a production line can be modified by the above method, and at the time, the above production line may be any production line to be subjected to virtual commissioning, such as a battery production line and an automobile production line.

In some embodiments of the present application, a working environment of virtual simulation can be built by Tecnomatix, then plug-in based on a Visual Studio platform is developed by C# programming language, and the plug-in is integrated into a Pose Editor interface of Tecnomatix in the form of controls. After a plurality of kinematic pairs are selected, pose parameters, the same in numerical value, of the plurality of kinematic pairs are modified by data interaction between the plug-in and the Pose Editor, and first information and second information are output through the plug-in.

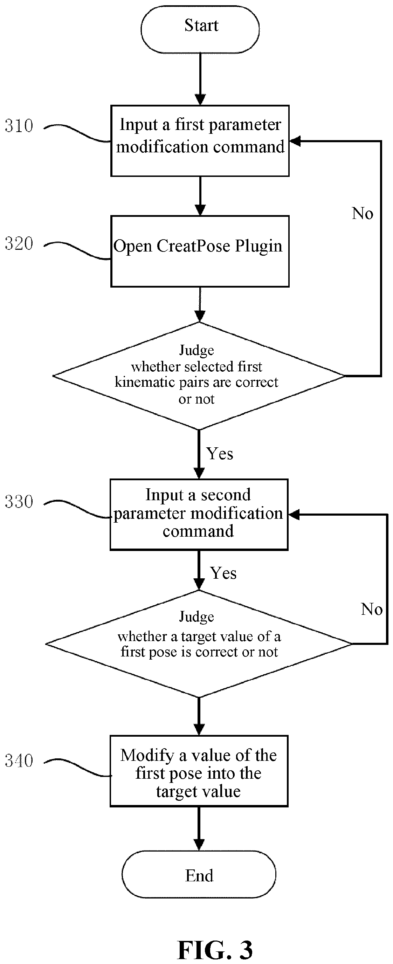

Fig. 3 shows a process of modifying the pose parameters of the kinematic pairs according to the above embodiments. In the embodiment, a dynamic link library CretePose.dll based on Visual Studio needs to be firstly established, and CretePose.dll is imported into Tecnomatix software. As shown in Fig. 3, the process of modifying the pose parameters of the kinematic pairs according to the embodiment is as follows:

S310: In the Tecnomatix software environment, use a first parameter modification command for batched selecting of kinematic pair objects such as an air cylinder and a shaft with Pose values to be modified; if no kinematic pair is selected according to the first parameter modification command, and/or, kinematic pairs of first devices do not include first kinematic pairs to be modified, output, by a system, first information, and display, by a human machine interaction interface, the first information so as to prompt a user that the selected kinematic pair is empty or wrong and the kinematic pair object needs to be reselected.

S320: Open developed plug-in CretePose under Tecnomatix software.

S330: Input specific Pose values of HOME, OPEN, and CLOSE of the kinematic pairs; if the input is not of a numerical type, output second information and display the second information through the human machine interaction interface, and prompt the user to confirm the pose value to be modified, or retype the pose value.

S340: Determine and modify the Pose value through the human machine interaction interface, and complete batched modification of the Pose values. If the kinematic pairs do not have the Pose of OPEN or CLOSE, output third information and display the third information through the human machine interaction interface to prompt the user that the kinematic pairs do not have a pose value to be modified, and it is necessary to confirm whether a second modification command is correct or not.

In the above embodiments, the user can conveniently modify the pose parameters of different kinematic pairs located on different devices by means of integrated controls, which can improve the modification efficiency of the parameters of the kinematic pairs. At the same time, the user can timely and visually know about possible defects of the first parameter modification command and the second parameter modification command, and then adjust the above commands in time. Accordingly, the efficiency of the virtual commissioning process can be improved.

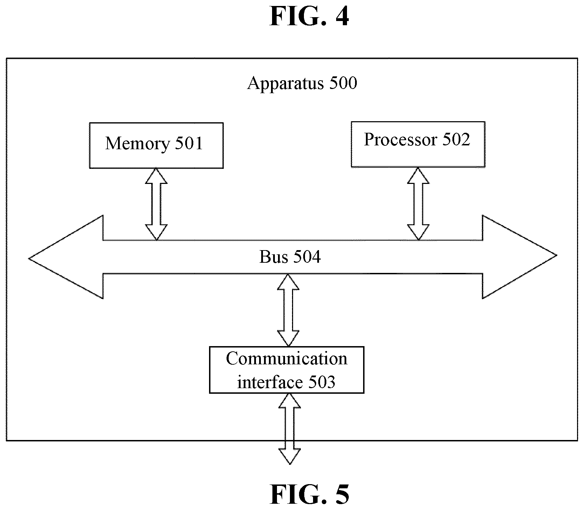

Fig. 4 is a schematic block diagram of an apparatus 400 for modifying parameters of kinematic pairs according to an embodiment of the present application. The apparatus 400 may execute the method for modifying the parameters of the kinematic pairs in the above embodiments of the present application. For example, the apparatus 400 may be the aforementioned virtual commissioning system 100.

As shown in Fig. 4, the apparatus includes a first acquisition module 410 configured to acquire a first parameter modification command used for performing instruction to modify a value of a first pose of first kinematic pairs. An interface module 420 configured to determine a plurality of first devices in a plurality of devices according to the first parameter modification command, wherein, the plurality of devices are configured to have kinematic pair driver software; and the plurality of first devices are a plurality of devices including the first kinematic pairs. A second acquisition module 430 configured to acquire a second parameter modification command including a target value of the first pose of the first kinematic pairs. A modification module 440 configured to invoke the kinematic pair driver software of the plurality of first devices according to the second parameter modification command so as to update the value of the first pose of the plurality of first kinematic pairs into the target value of the first pose.

In some embodiments of the present application, each first device includes at least one kinematic pair. A first parameter modification command includes identification information and/or path information of first kinematic pairs; and an interface module is configured to determine a plurality of devices including the first kinematic pairs as a plurality of first devices according to the identification information and/or path information of the first kinematic pairs.

In some embodiments of the present application, a modification module is configured to determine a target value of a first pose as a numerical type, and modify a value of the first pose of a plurality of first kinematic pairs into the target value of the first pose.

In some embodiments of the present application, an interface module is configured to determine that a plurality of devices do not include first devices. The apparatus further includes an output module configured to output first information, and the first information is used for performing instruction to reacquire a first parameter modification command.

In some embodiments of the present application, a modification module is configured to determine that first kinematic pairs do not have a first pose; and an output module is configured to output second information, and the second information is used for performing instruction to reacquire a second parameter modification command.

In some embodiments of the present application, a modification module is configured to determine that a target value of a first pose included in a second parameter modification command is not of a numerical type; or the second parameter modification command dose not include the target value of the first pose. An output module is configured to output third information, and the third information is used for performing instruction to reacquire the second parameter modification command.

In some embodiments of the present application, identification information of a first kinematic pair includes a name, a group type and/or a category of the first kinematic pair; and path information of the first kinematic pair includes a name and/or a category of a device with the first kinematic pair.

In some embodiments of the present application, a first device includes one or more of a gripper, a welding gun, an automatic door and window, a robot or a compound device. A first kinematic pair includes an air cylinder and/or a servo shaft.

In some embodiments of the present application, the aforementioned plurality of devices are devices on a battery production line.

Those skilled in the art can understand that the structure shown in Fig. 4 is only a block diagram of a partial structure relevant to the solutions of the present application, and does not constitute a limitation on a computer device to which the solutions of the present application are applied. The specific computer device may include more or fewer components than those shown in the figure, or combine certain components, or have different arrangements of components. Fig. 5 is a hardware structural schematic diagram of an image processing apparatus according to an embodiment of the present application. The image processing apparatus 500 shown in Fig. 5 includes a memory 501, a processor 502, a communication interface 503 and a bus 504. Wherein, the memory 501, the processor 502 and the communication interface 503 are mutually in communication connection through the bus 504.

The memory 501 may be a read-only memory (ROM), a static storage and a random access memory (RAM). The memory 501 can store programs. When the programs stored in the memory 501 are executed by the processor 502, the processor 502 and the communication interface 503 are configured to execute each step of the method for modifying the parameters of the kinematic pairs according to the embodiment of the present application.

The processor 502 may be a universal central processing unit (CPU), a microprocessor, an application specific integrated circuit (ASIC), a graphics processing unit (GPU) or one or more integrated circuits configured to execute related programs to realize functions required by units in an apparatus for processing graphic symbols according to the embodiment of the present application, or to execute the method for modifying the parameters of the kinematic pairs according to the embodiment of the present application.

The processor 502 may also be an integrated circuit chip with a signal processing capability. In the implementation process, each step of the method for modifying the parameters of the kinematic pairs according to the embodiment of the present application may be completed by an integrated logic circuit of hardware in the processor 502 or instructions in the form of software.

The above processor 502 may also be a universal processor, a digital signal processing (DSP) unit, the ASIC, a field programmable gate array (FPGA) or other programmable logic devices, discrete gates or transistor logic devices, and discrete hardware components. Various methods, steps, and logic block diagrams disclosed in the embodiments of the present application may be implemented or executed. The universal processor may be the microprocessor, or the processor may also be any conventional processor, etc. The steps of the method disclosed in combination with the embodiments of the present application may be directly implemented by a hardware processor, or implemented by a combination of a hardware module and a software module in the processor. The software module can be located in a mature storage medium in the field such as the random access memory, a flash memory, the read-only memory, a programmable read-only memory or an electrically erasable programmable memory and a register. The storage medium is located in the memory 501, and the processor 502 reads information in the memory 501, and combines the hardware to complete the functions required by the units included in the apparatus for processing the graphic symbols in the embodiment of the present application, or to execute the method for modifying the parameters of the kinematic pairs according to the embodiment of the present application.

The communication interface 503 implements communication between the apparatus 500 and other devices or communication networks by using a transmitter-receiver set including but not limited to a transceiver. For example, traffic data of an unknown device may be obtained through the communication interface 503.

The bus 504 may include a pathway for transmitting information between various components of the apparatus 500 (e.g., the memory 501, the processor 502, and the communication interface 503).

It should be noted that although the above apparatus 500 only shows the memory, the processor and the communication interface, in a specific implementation process, those skilled in the art should understand that the apparatus 500 may also include other devices necessary for implementing normal operation. Meanwhile, according to specific needs, those skilled in the art should understand that the apparatus 500 may also include hardware devices for implementing other additional functions. In addition, those skilled in the art should understand that the apparatus 500 may also only include devices necessary for realizing the embodiments of the present application, and does not necessarily include all the devices shown in Fig. 5.

The embodiment of the present application further provides a computer-readable storage medium storing program codes executed by a device, and the program codes include instructions for executing the steps in the above method for modifying the parameters of the kinematic pairs.

The embodiment of the present application further provides a production line system, including a plurality of devices, and the above apparatus for modifying the parameters of the kinematic pairs. The apparatus for modifying the parameters of the kinematic pairs is used for modifying parameters of kinematic pairs of the plurality of above devices.

The embodiment of the present application further provides a computer program product. The computer program product includes computer programs stored in a computer-readable storage medium. The computer programs include program instructions, and when the program instructions are executed by a computer, the computer executes the above method of modifying the parameters of the kinematic pairs.

The above computer-readable storage medium may be a transitory computer-readable storage medium, or a non-transitory computer-readable storage medium.

Those skilled in the art can clearly understand that, for the convenience and brevity of descriptions, the specific working process of the apparatus described above may be obtained with reference to the corresponding process in the foregoing method embodiments, which is repeated herein.

It is to be understood that the apparatus and the method disclosed by the several embodiments provided by the present application may be realized by other manners. For example, the above described apparatus embodiments are merely illustrative, such as unit division which is merely logic function division, and during practical implementation, there may be additional division manners. For example, a plurality of units or assemblies may be combined or integrated into another system, or some characteristics may be ignored or not executed. On the other hand, shown or discussed mutual coupling or direct coupling or communication connection may be realized through some interfaces, and apparatus or unit indirect coupling or communication connection may be in an electrical manner, or a mechanical manner or other forms.

The terms used in the present application are only used for describing the embodiments rather than limiting the claims. As used in the descriptions of the embodiments and the claims, the singular forms "a" and "the" are intended to include a plural form as well, unless clear context indication. Similarly, the term "and/or" as used in the present application is meant to include any and all possible combinations of one or more of the associated listed ones. Additionally, when used in the present application, the term "comprising" refers to the presence of stated features, integers, steps, operations, elements, and/or components, but does not exclude presence or addition of one or more of other features, integers, steps, operations, elements, components and/or groups thereof.

Aspects, implementation manners, implementations or features of the described embodiments can be used independently or in any combination. Aspects of the described embodiments can be implemented by the software, the hardware or a combination of the hardware and the software. The described embodiments may also be embodied by a computer-readable medium storing computer-readable code, and the computer-readable code includes instructions capable of being executed by at least one computing device. The computer-readable medium can be associated with any data storage device capable of storing data that can be read by a computer system. The exemplary computer-readable medium may include the read-only memory, the random access memory, a Compact Disc Read-Only Memory (CD-ROM), a Hard Disk Drive (HDD), a Digital Video Disc (DVD), magnetic tape, an optical data storage, etc. The computer-readable medium may also be distributed in computer systems linked through networks so that the computer-readable code can be stored and executed in a distributed manner.

The above technical description may refer to the drawings, which form a part of the present application, and the implementation manners according to the described embodiments are shown in the drawings through the description. Although these embodiments are described in sufficient detail to enable those skilled in the art to realize the embodiments, these embodiments are not limiting; and thus, other embodiments can be used, and changes can be made without departing from the scope of the described embodiments. For example, an operation sequence described in a flow chart is not limiting, and thus, a sequence of two or more operations illustrated and described in the flow chart may be changed according to several embodiments. As another example, in several embodiments, one or more operations illustrated and described in the flow chart are optional, or may be deleted. Additionally, certain steps or functions may be added to the disclosed embodiments, or a sequence of two or more steps is replaced. All such variations are considered to be included by the disclosed embodiments as well as the claims.

Additionally, the terms are used in the above technical description to provide a thorough understanding of the described embodiments. However, the described embodiments can be implemented without too particular details. Thus, the above description of the embodiments is presented for illustration and description. The embodiments presented in the foregoing description and the examples disclosed according to these embodiments, are provided independently to add context and to facilitate understanding of the described embodiments. The above specification is not intended to be exhaustive or to limit the described embodiments to the precise form of the present application. Several modifications, alternatives, and variations are possible in light of the above instructions. In some situations, well known process steps are not described in detail so as to avoid unnecessary influence on the described embodiments.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

1. A method for modifying parameters of kinematic pairs, wherein each kinematic pair comprises at least two motion components, and the at least two kinematic components perform relative motion so that the kinematic pair can have at least one pose; and the method comprises:
acquiring a first parameter modification command used for performing instruction to modify a value of a first pose of first kinematic pairs;
determining a plurality of first devices in a plurality of devices according to the first parameter modification command, wherein, the plurality of devices are configured to have kinematic pair driver software, and the plurality of first devices are a plurality of virtual devices comprising the first kinematic pairs;
acquiring a second parameter modification command comprising a target value of the first pose of the first kinematic pairs; and
invoking the kinematic pair driver software of the plurality of first devices according to the second parameter modification command so as to update the value of the first pose of the plurality of first kinematic pairs into the target value of the first pose.

2. The method according to claim 1, wherein each first device comprises at least one kinematic pair, and the first parameter modification command comprises identification information and/or path information of the first kinematic pairs; and the determining a plurality of first devices in a plurality of virtual devices according to the first parameter modification command comprises:
determining the plurality of virtual devices comprising the first kinematic pairs as the plurality of first devices according to the identification information and/or the path information of the first kinematic pairs.

3. The method according to claim 1 or 2, wherein the invoking the kinematic pair driver software of the plurality of first devices according to the second parameter modification command so as to update the value of the first pose of the plurality of first kinematic pairs into the target value of the first pose comprises:
determining that the target value of the first pose is of a numerical type; and
modifying the value of the first pose of the plurality of first kinematic pairs into the target value of the first pose.

4. The method according to any one of claims 1 to 3, wherein after acquiring the first parameter modification command, the method comprises:
determining that the plurality of virtual devices do not comprise the first devices; and/or,
the first devices do not comprise the first kinematic pairs; and
outputting first information used for performing instruction to reacquire the first parameter modification command.

5. The method according to any one of claims 1 to 4, wherein before invoking the kinematic pair driver software of the plurality of first devices according to the first parameter modification command, the method comprises:
determining that the first kinematic pairs do not have the first pose; and
outputting second information used for performing instruction to reacquire the second parameter modification command.

6. The method according to claim 3, wherein before the invoking the kinematic pair driver software of the plurality of first devices according to the second parameter modification command, the method comprises:
determining that the target value of the first pose included in the second parameter modification command is not of a numerical type, or,
the second parameter modification command does not comprise the target value of the first pose; and
outputting third information used for performing instruction to reacquire the second parameter modification command.

7. The method according to claim 2, wherein the identification information of each first kinematic pair comprises a name, a group type and/or a category of the first kinematic pair; and path information of each first kinematic pair comprises a name and/or a category of the virtual device with the first kinematic pair.

8. The method according to any one of claims 1 to 7, wherein each first device comprises one or more of a gripper, a welding gun, an automatic door and window, a robot or a compound device.

9. The method according to any one of claims 1 to 8, wherein each first kinematic pair comprises an air cylinder and/or a servo shaft.

10. The method according to any one of claims 1 to 9, wherein the plurality of devices are devices on a production line.

11. An apparatus for modifying parameters of kinematic pairs, wherein each kinematic pair comprises at least two motion components, and the at least two kinematic components perform relative motion so that the kinematic pair can have at least one pose; and the apparatus comprises:
a first acquisition module configured to acquire a first parameter modification command used for performing instruction to modify a value of a first pose of first kinematic pairs;
an interface module configured to determine a plurality of first devices in a plurality of devices according to the first parameter modification command, wherein, the plurality of devices are configured to have kinematic pair driver software, and the plurality of first devices are a plurality of virtual devices comprising the first kinematic pairs;
a second acquisition module configured to acquire a second parameter modification command comprising a target value of the first pose of the first kinematic pairs; and
a modification module configured to invoke the kinematic pair driver software of the plurality of first devices according to the second parameter modification command so as to update the value of the first pose of the plurality of first kinematic pairs into the target value of the first pose.

12. An apparatus for modifying parameters of kinematic pairs, comprising:
a memory configured to store programs; and
a processor configured to invoke and operate the programs from the memory to execute the method for modifying the parameters of the kinematic pairs according to any one of claims 1 to 10.

13. A computer-readable storage medium, storing computer programs, wherein the computer programs are executed by a processor to realize the steps of the method for modifying the parameters of the kinematic pairs according to any one of claims 1 to 10.

14. A production line system, comprising a plurality of devices, and
the apparatus for modifying the parameters of the kinematic pairs according to claim 11 or 12, which is configured to modify the parameters of the kinematic pairs of the plurality of devices.
